# EUROPÄISCHE PATENTSCHRIFT

(11) **EP 2 147 811 B1**
(45) Veröffentlichungstag und Bekanntmachung des Hinweises auf die Patenterteilung: **16.01.2013**
(21) Anmeldenummer: 09009224.8
(22) Anmeldetag: 15.07.2009
(51) Int. Cl.: B60H 1/00, F28F 9/00, F24H 3/04, F24H 9/18, B60H 1/22, F24H 9/06

(54) **Fahrzeugklimaanlage mit Fahrzeugheizung**
Vehicle air conditioning system with vehicle heating
Installation de climatisation de véhicule dotée d'un chauffage de véhicule

(30) Priorität: 21.07.2008 DE 102008034295; 04.10.2008 DE 102008050481
(43) Veröffentlichungstag der Anmeldung: 27.01.2010
(73) Patentinhaber: BorgWarner BERU Systems GmbH, 71636 Ludwigsburg (DE)
(72) Erfinder: Kochems, Jürgen, 71254 Ditzingen (DE); Krieger, Jörg, 76275 Ettlingen (DE); Wächter, Ralph, 76133 Karlsruhe (DE)
(74) Vertreter: Twelmeier Mommer & Partner

(56) Entgegenhaltungen:
- DE-A1- 10 118 600
- DE-A1-102006 025 320
- FR-A- 2 754 492
- FR-A- 2 849 806

## Beschreibung

Die Erfindung geht aus von einer Fahrzeugklimaanlage mit den im Oberbegriff des Anspruchs 1 angegebenen Merkmalen und einer Fahrzeugheizung für eine Fahrzeugklimaanlage gemäß dem Oberbegriff des Anspruchs 6.

Eine Fahrzeugheizung mit den im Oberbegriff des Anspruchs 7 angegebenen Merkmalen ist aus der DE 101 18 600 A1, der FR 2 754 492 A1 sowie aus der FR 2 849 806 A1 bekannt.

Aufgabe der vorliegenden Erfindung ist es, einen Weg aufzuzeigen, wie die Montage einer Fahrzeugheizung in einem Kraftfahrzeug erleichtert werden kann.

Diese Aufgabe wird durch eine Fahrzeugklimaanlage mit den in dem Anspruch 1 angegebenen Merkmalen gelöst. Die Aufgabe wird ferner durch eine Fahrzeugheizung gem. Anspruch 6 gelöst. Vorteilhafte Weiterbildungen der Erfindung sind Gegenstand der Unteransprüche.

Erfindungsgemäß ist vorgesehen, dass der Anschlussaufsatz der Fahrzeugheizung mindestens ein Rastelement zum Befestigen der Fahrzeugheizung aufweist. Mit einem solchen Rastelement kann eine Fahrzeugheizung durch Verrastung beispielsweise an dem Rahmen einer Klimaanlage oder einer im Fahrzeug vorgesehenen Haltung befestigt werden. Ein solches Verrasten lässt sich bei der Montage der Fahrzeugheizung in wesentlich kürzerer Zeit durchführen als eine Verschraubung. Überraschender Weise lässt sich trotz der erheblichen Temperaturunterschiede und damit verbunden thermischen Ausdehnungen und Spannungen durch eine Verrastung eine belastbare Befestigung der Fahrzeugheizung erreichen, dass während der Fahrt kein hörbares Klappern entsteht.

Um die Vorteile einer erfindungsgemäßen Verrastung zu nutzen, ist es nicht unbedingt erforderlich, das Rastelement an dem Anschlussaufsatz der Fahrzeugheizung vorzusehen. Ein Rastelement kann beispielsweise auch an einem Rahmen einer Fahrzeugklimaanlage vorgesehen werden und eine Fahrzeugheizung mittels dieses Rastelements an dem Rahmen der Fahrzeugklimaanlage befestigt werden. Möglich ist es auch, ein separates Rastelement zu verwenden, das in passende Öffnungen der Fahrzeugheizung und beispielsweise des Rahmens der Fahrzeugklimaanlage eingreift. Ein solches separates Rastelement kann beispielsweise als ein Stift ausgebildet sein, der an seinen beiden Enden jeweils einen verdickten Kopf mit einem Hinterschnitt aufweist. Diese Köpfe können geschlitzt sein, so dass sich der Stift zur Montage federnd zusammendrücken lässt.

Bevorzugt weißt das erfindungsgemäß verwendete Rastelement eine hinterschnittene Einführschräge auf. Auf diese Weise lässt sich das Einführen des Rastelements in eine Montageöffnung erleichtern. Das Rastelement kann beispielsweise als eine Zunge ausgebildet sein, die an ihrem freien Ende einen hinterschnittenen Kopf auf- weist. Möglich ist es auch, als Rastelement einen geschlitzen Bolzen vorzusehen, der beispielsweise einen hinterschnittenen Kopf mit einer Einführschräge tragen kann. Besonders vorteilhaft ist es, das Rastelement federnd beweglich auszugestalten, so dass die Verrastung durch Druck quer zur Längsrichtung des Rastelements gelöst und die Fahrzeugheizung somit erforderlichenfalls zu Reparaturzwecken wieder ausgebaut werden kann.

Eine vorteilhafte Weiterbildung der Erfindung sieht vor, dass sich das Rastelement parallel zu einem elektrischen Anschlusselement der Fahrzeugheizung erstreckt. Sowohl zur Montage der Fahrzeugheizung als auch zum Anschließen der Fahrzeugheizung an das Bordnetz des Fahrzeugs sind auf diese Weise Bewegungen erforderlich, die im Wesentlichen in derselben Richtung erfolgen. Dies vereinfacht die Montage und die Installation einer erfindungsgemäßen Fahrzeugheizung wesentlich. Besonders bevorzugt ist dabei, dass das Rastelement an einer Halterung vorgesehen ist und sich in derselben Richtung wie das oder die Anschlusselemente erstreckt. Beispielsweise kann das Rastelement durch eine Öffnungen in einem Flansch des Aufsatzes hindurch oder um einen Rand des Aufsatzes, insbesondere des Flansches, herum greifen. Auf diese Weise ist das Rastelement gut zugänglich, um durch Druck auf dessen Längsrichtung die Verrastung wieder zu lösen.

Es ist möglich, den Anschlussaufsatz nur auf einer Seite durch Verrasten zu befestigen. An einer gegenüberliegenden Seite kann der Anschlussaufsatz beispielsweise mit dem Rahmen einer Fahrzeugklimaanlage verhakt sein. Der dafür erforderliche Haken kann an der Fahrzeugheizung oder an dem Rahmen der Fahrzeugklimaanlage vorgesehen sein. Möglich ist es aber beispielsweise auch, dass die Fahrzeugheizung an gegenüberliegenden Seiten durch Rastelemente an dem Fahrzeug befestigt wird.

Eine weitere vorteilhafte Weiterbildung der Erfindung sieht vor, dass der Anschlussaufsatz eine Aufnahme für einen Steckverbinder aufweist. Auf diese Weise lässt sich die Fahrzeugheizung besonders einfach an das Bordnetz eines Fahrzeugs anschließen. Bevorzugt erhält der wenigstens eine Heizstab einer erfindungsgemäßen Fahrzeugheizung ein Kontaktblech, an dem das oder die PTC-Heizelemente anliegen. Dieses Kontaktblech ragt bevorzugt aus dem Heizstab heraus und als elektrischer Anschluss in den Anschlussaufsalz hinein. Ein Masseanschluss kann in ähnlicher Weise in Form von einer oder mehreren Kontaktzungen ausgebildet werden. Bevorzugt ist es jedoch, den Masseanschluss als einen Massebolzen auszubilden.

Eine weitere vorteilhafte Weiterbildung der Erfindung sieht vor dass die Fahrzeugheizung an einem von dem Anschlussaufsatz abgewandten Ende einen Zapfen zum Einstecken in eine Halteöffnung aufweist. Auf diese Weise kann die Heizvorrichtung besonderes einfach und dennoch präzise befestigt werden. An einem Ende wird die Heizvorrichtung durch den Zapfen positioniert an ihrem anderen Ende durch Verrasten festgelegt. Besonders vorteilhaft ist es dabei, die Heizvorrichtung durch Verrasten an gegenüberliegenden Enden festzulegen, so dass diese an weit voneinander entfernten Punkten befestigt ist. Vorteilhaft ist es insbesondere die Verrastung an einem Flansch des Anschlussaufsatzes vorzunehmen, der sich von der Strömungsrichtung eines zu erwärmenden Luftstroms aus gesehen seitlich neben dem oder den Wärmeübertragern erstreckt. Bevorzugt hat der Anschlussaufsatz sich gegenüberliegend angeordnete Befestigungsflansche.

Eine erfindungsgemäße Fahrzeugheizung kann als Heizvorrichtung beispielsweise einen oder mehrere Heizstäbe aufweisen, die ein Vierkantrohr als Gehäuse haben und auf die Lamellen als Wärmeübertrager aufgeschoben sind. Bevorzugt sind der oder die Heizstäbe einer erfindungsgemäßen Fahrzeugheizung als Vierkantrohre eines Strangpressprofil ausgebildet, das zugleich einen Wärmeübertrager bildet. Der Wärmeübertrager eines solchen Strangpressprofils kann sich ausgehend von dem Vierkantrohr als Wärmeabgabepanel erstrecken, in dem quer zur Strangpressrichtung durchströmbare Öffnungen vorgesehen sind. Heizvorrichtungen mit aus Strangpressprofilen gebildeten Wärmeübertragern sind im Einzelnen beispielsweise in der WO 2007/071335 A1 beschrieben.

Die für eine erfindungsgemäße Fahrzeugheizung verwendeten PTC-Heizelemente können keramische PTC-Heizelemente sein. Möglich ist es aber auch, polymere PTC-Heizelemente zu verwenden. Mit polymeren PTC-Heizelementen ist es insbesondere möglich, Wärmeübertrager einstückig mit den Heizelementen auszubilden.

Weitere Einzelheiten und Vorteile der Erfindung werden an Ausführungsbeispielen unter Bezugnahme auf die beigefügten Zeichnungen erläutert. Gleiche und übereinstimmende Bezugszahlen sind dabei mit übereinstimmenden Bezugszahlen versehen. Es zeigen:
- Figur 1:: ein Ausführungsbeispiel zur erfindungsgemäßen Befestigung einer Fahrzeugheizung;
- Figur 2:: eine Detailansicht zu Figur 1;
- Figur 3:: ein nicht-erfindungsgemäßes Beispiel zur Befestigung einer Fahrzeugheizung;
- Figur 4:: eine Detailansicht zu Figur 3;
- Figur 5:: eine schematische Darstellung der Verrastung gemäß Figur 4; und
- Figur 6:: ein weiteres Ausführungsbeispiel einer Fahrzeugheizung.

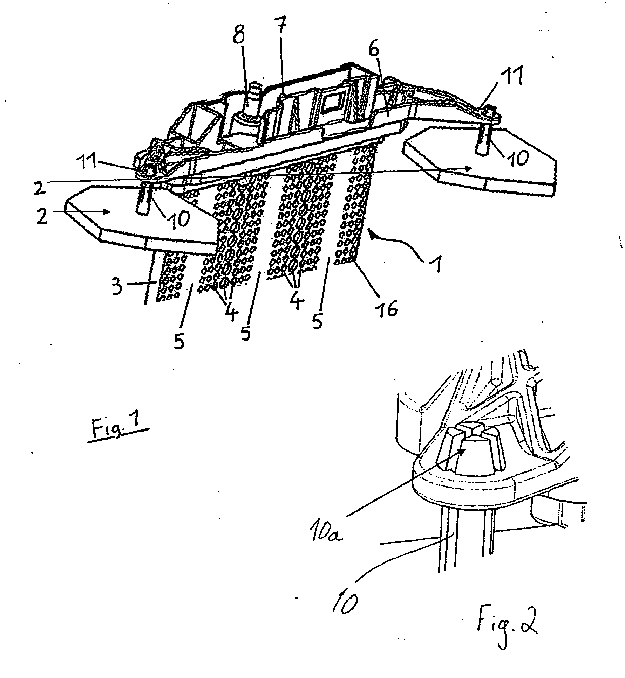

Figur 1 zeigt ein Ausführungsbeispiel einer Fahrzeugheizung 1, die durch Verrastung in einem Kraftfahrzeug an einer schematisch dargestellten Halterung 2 befestigt ist. Bei dieser Halterung 2 kann es sich beispielsweise um den Rahmen einer Fahrzeugklimaanlage handeln. Ein solcher Rahmen kann beispielsweise einen Strömungskanal umgeben, durch den ein zu erwärmender oder zu kühlender Luftstrom strömt.

Die dargestellte Heizung 1 hat einen metallischen Wärmeübertrager, der von einem Strangpressprofil 3 gebildet ist, dass in einer Basisplatte 16 mit quer zur Strangpressrichtung mit durchströmbaren Öffnungen 4 versehen ist. Das Strangpressprofil 3 bildet drei Heizstäbe 5 mit rechteckigem Innenquerschnitt, in denen jeweils mehrere PTC-Heizelemente (nicht dargestellt) angeordnet sind.

Auf einer Stirnseite des Strangpressprofils 3 und damit auf den Heizstäben 5 sitzt ein Anschlussaufsatz 6 mit elektrischen Anschlüssen 7, 8 der Fahrzeugheizung 1.

In den Heizstäben 5 ist jeweils ein gegenüber dem Strangpressprofil 3 isoliertes Kontaktblech angeordnet, an dem die PTC-Elemente anliegen und die aus dem Heizstab 5 hinaus und als Kontaktzunge 7 in den Anschlussaufsatz 6 hineinragen. Zum Betrieb der Heizvorrichtung werden diese Kontaktzungen 7 auf Potential gelegt. Die Anschlussaufsatz 6 bildet eine Steckverbinderaufnahme, so dass der hierfür erforderliche elektrische Kontakt zum Bordnetz des Fahrzeugs leicht hergestellt werden kann. Ein Masseanschluss kann prinzipiell ebenfalls durch Kontaktzungen hergestellt werden. Bei dem dargestellten Ausführungsbeispiel ist der Masseanschluss jedoch als ein Bolzen 8 ausgebildet, der das Strangpressprofil 3 kontaktiert.

Figur 2 zeigt in einer Detailansicht, wie der Anschlussaufsatz 6 durch eine Verrastung an der Halterung 2 befestigt wird. Die Verrastung wird mittels Rastelementen 10 bewirkt, die an der Halterung 2, also dem Rahmen der Fahrzeugklimaanlage vorgesehen sind. Die Rastelemente 10 können beispielsweise an die Halterung 2 angegossen sein, was sich durch Spritzgießen leicht verwirklichen lässt.

Wie Figur 2 zeigt, sind die Rastelemente 10 als geschlitzte Bolzen ausgeführt. Die dargestellten Bolzen haben zwei kreuzförmig angeordnete Schlitze, so dass die Bolzenteile federnd zusammen gedrückt werden können. Die Rastelemente 10 tragen einen hinterschnittenen Kopf mit einer Einführschräge 10a. Dieser Kopf ragt durch eine Befestigungsöffnung des Anschlussaufsatzes 6 hindurch. Die Befestigungsöffnung ist in einem Flansch 11 des Anschlussaufsatzes 6 vorgesehen. Bei dem dargestellten Ausführungsbeispiel hat der Anschlussaufsatz 6 auf zwei gegenüberliegenden Seiten jeweils einen Flansch 11 mit einer solchen Befestigungsöffnung.

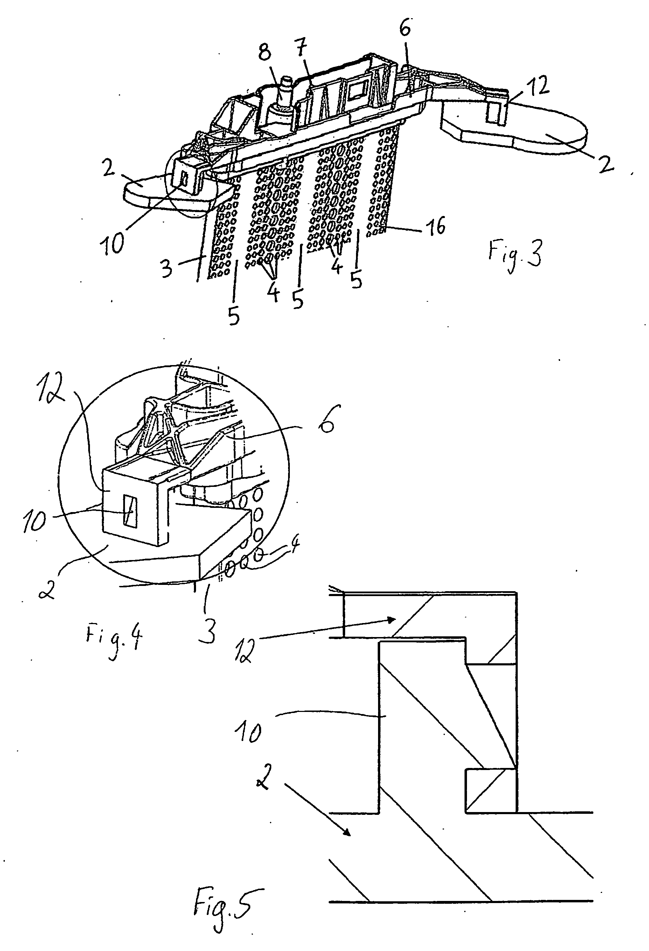

Figur 3 zeigt ein nicht erfindungsgemäßes Beispiel zur Befestigung der Heizvorrichtung 1 in einem Kraftfahrzeug an einer Halterung 2. Details der Verrastung sind in Figur 4, einer Detailansicht, und in Figur 5, einer dazugehörenden Querschnittsansicht, zu erkennen. Bei dem in den Figur 3 bis 5 dargestellten Beispiel sind die Rastelemente 10 als Zungen ausgebildet, die mit einem Hinterschnitt in Öffnungen an Halteelementen des Anschlussaufsatzes eingreifen. Die Halteelemente 12 des Anschlussaufsatzes 6 sind als abgewinkelte Endstücke des Befestigungsflansches 6 ausgebildet.

Bei den vorstehend beschriebenen Ausführungsbeispielen wurde die Befestigung der Fahrzeugheizung 1 jeweils mittels eines an einer Haltung 2 angebrachten Rastelements 10 bewirkt. Die dargestellten Ausführungsbeispiele lassen sich jedoch ohne weiteres so abwandeln, dass das Rastelement 10 an dem Anschlussaufsatz 6 der Fahrzeugheizung 1 selbst angebracht, vorzugsweise einstückig durch Spritzgießen mit dem Anschlussaufsatz 6 hergestellt ist. Die Rastelemente 10 eines solchen Anschlussaufsatzes 6 aus Kunststoff können in entsprechende Öffnungen eines Rahmens 2 einer Fahrzeugklimaanlage eingreifen. Bei gem. den Figuren 1 und 2 als geschlitzte Zapfen ausgebildeten Rastelementen 10 können passende Bohrlöcher benutzt werden. Zur Befestigung von Rastelementen 10, die gem. den Figuren 3 bis 5 Kontaktzungen aufweisen, kann in entsprechend geformte Schlitze des Rahmens 2 eingegriffen werden.

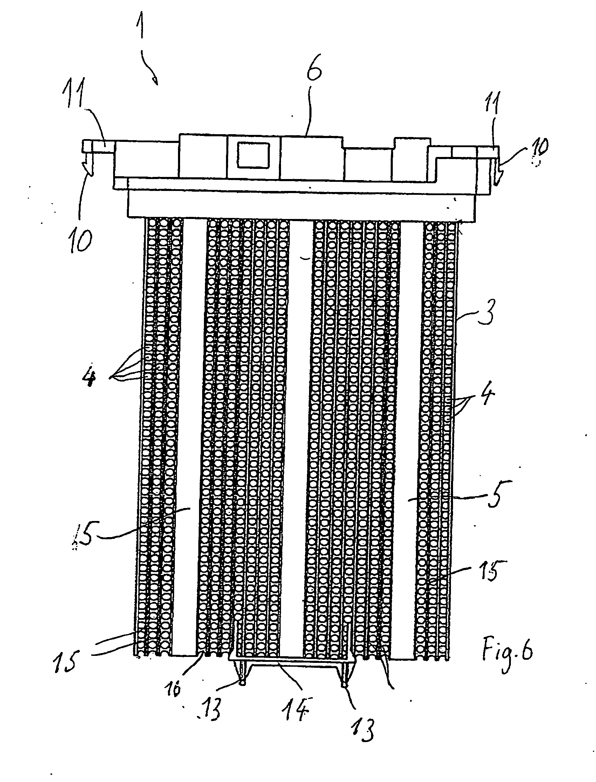

Figur 6 zeigt ein Ausführungsbeispiel einer Fahrzeugheizung 1, bei dem an dem Anschlussaufsatz 6 zwei Rastelemente 10 vorgesehen sind. An einem von dem Anschlussaufsatz 6 abgewandten Ende der Fahrzeugheizung sind eine oder mehrere Zapfen 13 zum Einstecken in eine Positionieröffnung vorgesehen ist. Die Zapfen 13 sind an einem Positionierteil 14 angeordnet, das auf das Strangpressprofil 3 aufgesteckt und vorzugsweise klemmend mit diesem verbunden ist. Einer oder mehrer derartige Zapfen sind bevorzugt auch bei der in den Figuren 1 bis 5 dargestellten Heizvorrichtung 1 vorgesehen.

Figur 6 zeigt auch, dass das Strangpressprofil 3 Wärmeabgaberippen 15 trägt, welche die Wärmeübertragung an ein vorbeiströmendes Fluid verbessern.

Bei den vorstehend erläuterten Ausführungsbeispielen wurde der Anschlussaufsatz 6 der Fahrzeugheizung 1 auf zwei gegenüberliegenden Seiten mit einem Rastelement 10 befestigt. Eines dieser Rastelemente 10 kann durch eine alternative Befestigung ersetzt werden. Beispielsweise kann der Anschlussaufsatz 6 auf einer Seite eingehakt und anschließend durch eine Schwenkbewegung auf der anderen Seite durch Verrasten befestigt werden. Ein entsprechender Haken kann an der Halterung 2 vorgesehen sein und in eine Öffnung, beispielsweise einen Schlitz des Anschlussaufsatzes 6, eingreifen. Eine solche Öffnung kann insbesondere in dem Flansch 11 des Anschlussaufsatzes 6 vorgesehen werden. Dabei ist es möglich, in einer solchen Öffnung einen Steg vorzusehen, um den der Haken herum greifen kann. Möglich ist es auch, einen solchen Haken an dem Anschlussaufsatz 6 vorzusehen und um einen Steg oder den Rand des Rahmens der Fahrzeugklimaanlage herum greifen zu lassen.

## Patentansprüche

1. Fahrzeugklimaanlage mit
einem Rahmen (2), der einen Strömungskanal für einen Luftstrom umgibt, und einer in dem Strömungskanal angeordneten Fahrzeugheizung (1), die mindestens ein PTC-Heizelement und einen Wärmeübertrager (16) aufweist, an dem ein Anschlussaufsatz (6) mit mindestens einem elektrischen Anschluss (7, 8) der Heizung (1) befestigt ist, wobei der Anschlussaufsatz (6) mittels eines Rastelements (10), das einen hinterschnittenen Kopf am freien Ende einer Zunge oder an einem geschlitzten Bolzen aufweist, an dem Rahmen (2) befestigt ist, **dadurch gekennzeichnet, dass** der Anschlussaufsatz (6) einen Flansch (11) aufweist, der mittels des Rastelements (10) an dem Rahmen (2) befestigt ist.

2. Fahrzeugheizung nach Anspruch 1, **dadurch gekennzeichnet, dass** das Rastelement (10) in eine Öffnung eingreift, die in dem Flansch (11) des Anschlussaufsatzes (6) angeordnet ist.

3. Fahrzeugklimaanlage nach einem der vorstehenden Ansprüche, **dadurch gekennzeichnet, dass** sich das Rastelement (10) parallel zu einem elektrischen Anschlusselement (7, 8) der Fahrzeugheizung (1) erstreckt.

4. Fahrzeugklimaanlage nach einem der vorstehenden Ansprüche, **dadurch gekennzeichnet, dass** der Anschlussaufsatz (6) mit dem Rahmen (2) verhakt ist.

5. Fahrzeugklimaanlage nach Anspruch 4, **dadurch gekennzeichnet, dass** der Haken und die Öffnung auf gegenüberliegenden Seiten des Anschlussaufsatzes (6) angeordnet sind.

6. Fahrzeugheizung für eine Fahrzeugklimaanlage nach einem der vorstehenden Ansprüche, wobei die Fahrzeugheizung
wenigstens einer Heizvorrichtung (5) mit wenigstens einem PTC-Heizelernent, einen oder mehrere mit der Heizvorrichtung (5) verbundene Wärmeübertrager (16), und
einen auf der wenigstens einen Heizvorrichtung (5) sitzenden Anschlussaufsatz (6) mit mindestens einem elektrischen Anschluss (7, 8) der Fahrzeugheizung (1), aufweist, wobei
der Anschlussaufsatz (6) mindestens ein Rastelement (10) zum Befestigen der Fahrzeugheizung (1) aufweist, wobei das Rastelement (10) einen hinterschnittenen Kopf am freien Ende einer Zunge oder an einem geschlitzten Bolzen aufweist, **dadurch gekennzeichnet, dass** der Anschlussaufsatz (6) einen Flansch (11) aufweist, der das Rastelement (10) aufweist.

7. Fahrzeugheizung nach Anspruch 6, **dadurch gekennzeichnet, dass** das Rastelement (10) eine hinterschnittene Einführschräge aufweist.

8. Fahrzeugheizung nach Anspruch 6 oder 7, **dadurch gekennzeichnet, dass** das Rastelement (10) an den Anschlussaufsatz (6) angegossen ist.

9. Fahrzeugheizung nach einem der Ansprüche 6 bis 8, **dadurch gekennzeichnet, dass** der Anschlussaufsatz (6) auf zwei gegenüberliegenden Seiten ein Rastelement (10) aufweist.

10. Fahrzeugheizung nach einem der Ansprüche 6 bis 9, **dadurch gekennzeichnet, dass** der Anschlussaufsatz (6) einen Haken aufweist, der an einer dem Rastelement gegenüberliegenden Seite des Anschlussaufsatzes angeordnet ist.

11. Fahrzeugheizung nach einem der Ansprüche 6 bis 10, **dadurch gekennzeichnet, dass** an einem von dem Anschlussaufsatz (6) abgewandten Ende ein Zapfen (13) zum Einstecken in eine Halteöffnung vorgesehen ist.

## Claims

1. Motor vehicle air conditioning system, having
a frame (2) surrounding a flow channel for an airflow, and a vehicle heater (1) disposed in the flow channel, having at least one PTC heating element and one heat exchanger (16), on which a connection fixture (6) with at least one electric connection (7, 8) of the heater (1) is attached, wherein the connection fixture (6) is attached to the frame (2) by means of a catch element (10) having an undercut head at the free end of a tongue, or a slotted bolt, **characterized in that** the connection fixture (6) has a flange (11) being attached to the frame (2) by means of the catch element (10).

2. Motor vehicle heater according to claim 1, **characterized in that** the catch element (10) engages into an opening being disposed in the flange (11) of the connection fixture (6).

3. Motor vehicle air conditioning system according to one of the previous claims, **characterized in that** the catch element (10) extends parallel toward an electric connection element (7, 8) of the motor vehicle heater (1).

4. Motor vehicle air conditioning system according to one of the previous claims, **characterized in that** the connection fixture (6) is hooked into the frame (2).

5. Motor vehicle air conditioning system according to claim 4, **characterized in that** the hook and the opening are disposed on opposite sides of the connection fixture (6).

6. Motor vehicle heater for a motor vehicle air conditioning system according to one of the previous claims, wherein the motor vehicle heater
has at least one heating device (5) with at least one PTC heating element,
one or more heat exchangers (16) being connected to the heating device (5), and
a connection fixture (6) having an electric connection (7, 8) of the motor vehicle heater (1), which is seated on the at least one heating device (5), wherein
the connection fixture (6) has at least one catch element (10) for attaching the motor vehicle heater (1), wherein the catch element (10) has an undercut head at the free end of a tongue, or on a slotted bolt, **characterized in that** the connection fixture (6) has a flange (11) comprising the catch element (10).

7. Motor vehicle heater according to claim 6, **characterized in that** the catch element (10) has an undercut insertion inclination.

8. Motor vehicle heater according to claims 6 or 7, **characterized in that** the catch element (10) is cast onto the connection fixture (6).

9. Motor vehicle heater according to one of the claims 6 to 8, **characterized in that** the connection fixture (6) has a catch element (10) on two opposite sides.

10. Motor vehicle heater according to one of the claims 6 to 9, **characterized in that** the connection fixture (6) has a hook being disposed on a side of the connection fixture that is opposite of the catch element.

11. Motor vehicle heater according to one of the claims 6 to 10, **characterized in that** a journal (13) for inserting a retaining opening is provided on an end facing away from the connection fixture (6).

## Revendications

1. Système de climatisation pour véhicules, avec
- un cadre (2) entourant un canal d'écoulement destiné à un flux d'air, et un chauffage de véhicule (1) agencé dans le canal d'écoulement, comportant au moins un élément de chauffage PTC et un échangeur de chaleur (16), auquel est fixé un embout de raccordement (6) avec au moins une connexion électrique (7, 8) du chauffage (1), dans lequel l'embout de raccordement (6) est fixé au cadre (2) au moyen d'un élément d'encliquetage (10) comportant une tête contre-dépouillée à l'extrémité libre d'une langue ou sur un boulon à fente, **caractérisé en ce que** l'embout de raccordement (6) comporte une bride (11) fixée au cadre (2) au moins de l'élément d'encliquetage.

2. Système de chauffage pour véhicules selon la revendication 1, **caractérisé en ce que** l'élément d'encliquetage (10) s'engage dans une ouverture prévue dans la bride (11) de l'embout de raccordement (6).

3. Système de climatisation pour véhicules selon l'une des revendications précédentes, **caractérisé en ce que** l'élément d'encliquetage (10) s'étend parallèlement à un élément de raccordement électrique (7, 8) du chauffage de véhicule (1).

4. Système de climatisation pour véhicules selon l'une des revendications précédentes, **caractérisé en ce que**
l'embout de raccordement (6) est accroché dans le cadre (2).

5. Système de climatisation pour véhicules selon la revendication 4, **caractérisé en ce que** le crochet et l'ouverture sont agencés sur des côtés opposés de l'embout de raccordement (6).

6. Chauffage de véhicule pour un système de climatisation pour véhicules selon l'une des revendications précédentes, dans lequel le chauffage de véhicule
comporte au moins un dispositif de chauffage (5) avec au moins un élément de chauffage PTC, un ou plusieurs échangeurs de chaleur (16) relié(s) au dispositif de chauffage (5), et
un embout de raccordement (6) reposant sur l'au moins un dispositif de chauffage (5), avec au moins une connexion électrique (7, 8) du chauffage de véhicule (1), dans lequel
l'embout de raccordement (6) comporte au moins un élément d'encliquetage (10) pour la fixation du chauffage de véhicule (1), dans lequel l'élément d'encliquetage (10) comporte une tête contre-dépouillée à l'extrémité libre d'une langue ou sur un boulon à fente, **caractérisé en ce que** l'embout de raccordement (6) comporte une bride (11) possédant l'élément d'encliquetage (10).

7. Système de chauffage pour véhicules selon la revendication 6, **caractérisé en ce que** l'élément
d'encliquetage (10) comporte un chanfrein d'insertion contre-dépouillé.

8. Système de chauffage pour véhicules selon la revendication 6 ou 7, **caractérisé en ce que** l'élément d'encliquetage (10) est moulé sur l'embout de raccordement (6).

9. Système de chauffage pour véhicules selon l'une des revendications 6 à 8, **caractérisé en ce que** l'embout de raccordement (6) comporte un élément d'encliquetage (10) sur deux côtés opposés.

10. Système de chauffage de véhicule selon l'une des revendications 6 à 9, **caractérisé en ce que** l'embout de raccordement (6) comporte un crochet agencé d'un côté de l'embout de raccordement opposé à l'élément d'encliquetage.

11. Système de chauffage de véhicule selon l'une des revendications 6 à 10, **caractérisé en ce qu'**un pivot (13) destiné à être inséré dans une ouverture de maintien est prévu à une extrémité détournée de l'embout de raccordement (6).
